# EUROPÄISCHE PATENTSCHRIFT

(11) **EP 0 263 449 B1**
(45) Veröffentlichungstag und Bekanntmachung des Hinweises auf die Patenterteilung: **29.12.1993**
(21) Anmeldenummer: 87114436.6
(22) Anmeldetag: 02.10.1987
(51) Int. Cl.: H04H 1/00, H04N 7/00

(54) **Verfahren zum Uebertragen eines digitalisierten Hörfunksignals**
Method for broadcasting digital sound signals
Procédé de radio-diffusion de signaux de son numériques

(30) Priorität: 04.10.1986 DE 3633882
(43) Veröffentlichungstag der Anmeldung: 13.04.1988
(73) Patentinhaber: Bayerische Rundfunkwerbung GmbH, 80335 München (DE)
(72) Erfinder: Plenge, Georg, Prof. Dr., D-8195 Egling-Thanning (DE); Dudek,Lothar,Dipl.-Ing., D-8056 Neufahrn (DE)
(74) Vertreter: Konle, Tilmar, Dipl.-Ing.

(56) Entgegenhaltungen:
- DE-A- 2 639 432
- US-A- 2 644 942
- US-A- 4 358 771
- IEEE TRANSACTIONS ON CONSUMER ELECTRONICS, CE-32 (1986) Aug., No. 3, New York, USA; H. Zibold et al.: "D2-MAC - A new feature for digital TV", Seiten 279-282.

## Beschreibung

Die Erfindung bezieht sich auf ein Verfahren zum Übertragen eines digitalisierten Hörfunksignals gemäß dem Oberbegriff des Anspruchs 1. Ein derartiges Verfahren ist aus IEEE TRANSACTIONS ON CONSUMER ELECTRONICS; CE-32 (1986) Aug., No.3, New York, USA, "D2-MAC-A new feature for digital TV", Seiten 279/282, H. Zibold et.al. bekannt.

Aufgrund bestehender Frequenzzuteilung für Hörrundfunk lassen sich qualitativ hochwertige terrestrische Hörfunkübertragungen, wie sie z.B. in der DE- A-34 40 613 beschrieben sind, nur im dafür festgelegten UKW-Bereich zwischen 87,5 MHz bis 108 MHz vornehmen. Diese Festlegungen lassen nur die Verbreitung einer begrenzten Zahl von Programmen in analoger Codierung zu. Innerhalb eines Versorgungsgebietes, z.B. Bayern, können daher maximal 4 bis 5 stereofone Hörfunkprogramme flächendeckend ausgestrahlt werden.

Durch die Einführung der digitalen Schallplatte ist für die Tonwiedergabe im Heim ein neuer Qualitätsstandard gesetzt worden. Es besteht daher der allgemeine Wunsch, denselben neuen Qualitätsstandard auch bei der Hörrundfunkübertragung bieten zu können, was eine digitale Codierung erfordert. Aus Fernsehübertragungssystemen für den D2-MAC-Standard ist es aus dem eingangs erwähnten Dokument IEEE T.C.E. von H. Zibold et.al. bereits bekannt, zusammen mit dem Bildsignal bis zu vier digital codierte Tonkanäle mit hoher Qualität zu übertragen. Man könnte daran denken, diese Tonkanäle nicht nur zur Übertragung des Fernsehtons, sondern auch für die Übertragung eines oder mehrerer unabhängiger digitalisierter Hörfunksignale zu verwenden, ohne daß dabei neue Frequenzzuteilungen nötig sind. Allerdings müßten Empfänger für derart übertragene, digitalisierte Hörfunksignale mit einer aufwendigen Fernsehton-Demodulationsschaltung ausgerüstet werden, was für bloße Hörfunkempfänger unangemessen ist. Eine andere Möglichkeit zur Übertragung eines digitalen Hörfunkprogramms besteht darin, im zugeteilten Hörfunk-Frequenzband ein bestehendes analoges Hörfunkprogramm durch das digitale Hörfunkprogramm zu ersetzen. Ein solcher Austausch ist jedoch aus verschiedenen Gründen, insbesondere wegen der Unverträglichkeit frequenzmäßig benachbarter analoger und digitaler Hörfunkausstrahlung nicht möglich, wie sich in Feldversuchen gezeigt hat.

Die Aufgabe der Erfindung besteht darin, eine digitale terrestrische Hörfunkübertragung zu ermöglichen, ohne bestehende Übertragungssysteme zu beeinträchtigen und gleichzeitig ohne neue Frequenzzuteilungen auszukommen.

Diese Aufgabe wird erfindungsgemäß durch die kennzeichnenden Merkmale des Anspruchs 1 gelöst.

Vorteilhafte Ausgestaltungen und Weiterbildungen des erfindungsgemäßen digitalen Hörfunkübertragungssystems ergeben sich aus den Unteransprüchen.

Die Erfindung beruht zunächst auf der Überlegung, daß der Signal-Rauschabstandsbedarf für analoge Ton- oder auch Bildsignalausstrahlungen wesentlich größer ist als für digitale Tonausstrahlungen, sofern ein einfaches Modulationsverfahren für die Übertragung der digitalen Audioinformation gewählt wird, z.B. eine 2 PSK- oder 4 PSK-Modulation. Die weitere Erwägung zielt auf den Umstand, daß Gleichkanal-Fernsehsender örtlich so weit voneinander entfernt sein müssen, daß die Störabstandsbedingungen für die betreffenden abgestrahlten Fernsehsignale untereinander eingehalten werden. Diesen Umstand macht sich die Erfindung zunutze, indem in ein bestehendes Gleichkanal-Fernsehsendernetz ein weiteres Sendernetz eingeschachtelt wird, über welches digital codierte Hörfunkprogramme abgestrahlt werden. Die Leistung dieser digitalen Hörfunksender läßt sich so wählen, daß einerseits die bestehenden Fernsehnetze nicht gestört werden und andererseits das empfangene digitale Hörfunksignal noch oberhalb der durch die benachbarten Fernsehsender erzeugten Störungen liegt. Um dennoch eine ausreichende Versorgung des digitalen Hörfunksenders zu gewährleisten, empfiehlt es sich, das digitale Hörfunksignal ähnlich wie ein Fernsehsignal zu strukturieren, um die Methoden der Fernsehnetzplanung mit Offsetbetrieb auch auf das eingeschachtelte digitale Hörfunknetz anwenden zu können. Ferner empfiehlt es sich, die Störwirkung des digitalen Hörfunksenders auf den Empfang der gleichkanaligen Fernsehsendung durch geeignete Wahl des Sendeantennendiagrammes des Hörfunksenders zu minimieren.

Die Erfindung wird anhand der Zeichnungen näher erläutert. Es zeigt:
- Fig. 1: eine schematische Ansicht eines Gleichkanal-Fernsehsendernetzes in welches ein digitaler Hörfunksender eingeschachtelt ist;
- Fig. 2: Zeit- und Frequenzdiagramme eines von dem digitalen Hörfunksender gemäß Fig. 1 abgestrahlten digitalen Hörfunksignals, und
- Fig. 3: ein Antennendiagramm eines in Fig. 1 vorgesehenen digitalen Hörfunksenders.

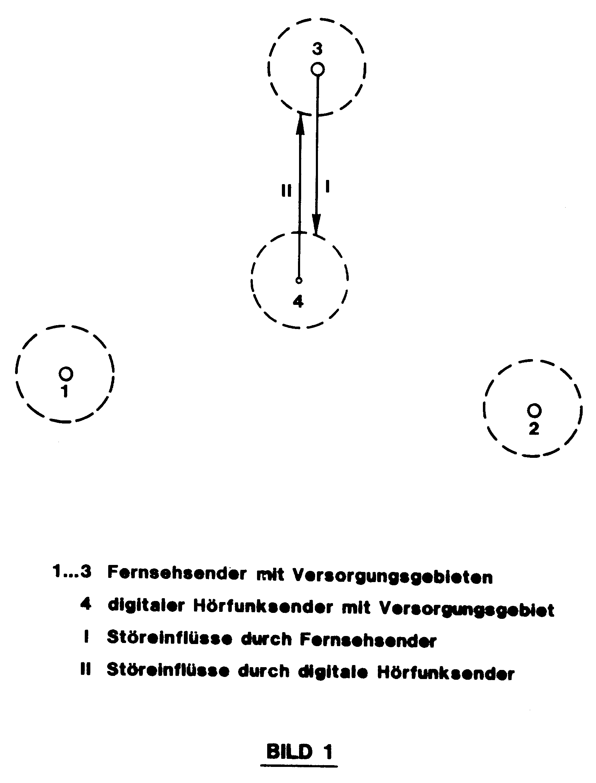

In Fig. 1 sind die Standorte dreier gleichkanaliger Fernsehsender 1, 2, 3 mit ihren gestrichtelt angedeuteten Versorgungsgebieten eingezeichnet. Dabei sei angenommen, daß diese Standorte auf den Eckpunkten eines gleichseitigen Dreiecks liegen, so daß die Abstände der Fernsehsender 1, 2, 3 untereinander gleich sind. Diese Abstände sind frequenzplanerisch so gewählt, daß am Rande jedes gestrichelt eingezeichneten Versorgungsgebietes die gleichkanaligen Nachbarsender mit einem Pegel (= Störpegel) einfallen, der 50 dB unter dem Pegel (= Nutzpegel) des Fernsehsenders des betreffenden Versorgungsgebietes liegt. Zur weiteren Reduzierung von Gleichkanalstörungen oder Verminderung des Abstandes zwischen Gleichkanalsendern arbeiten die Fernsehsender 1, 2, 3 nicht auf exakt derselben Sendefrequenz, sondern sind frequenzmäßig um einen Bruchteil der Horizontalfrequenz 15,625 kHz gegeneinander frequenzversetzt, was als "Offset-Betrieb" bezeichnet wird. Infolge dieses geringfügigen Frequenzversatzes sind die Frequenzspektren der Gleichkanalsender miteinander verkämmt.

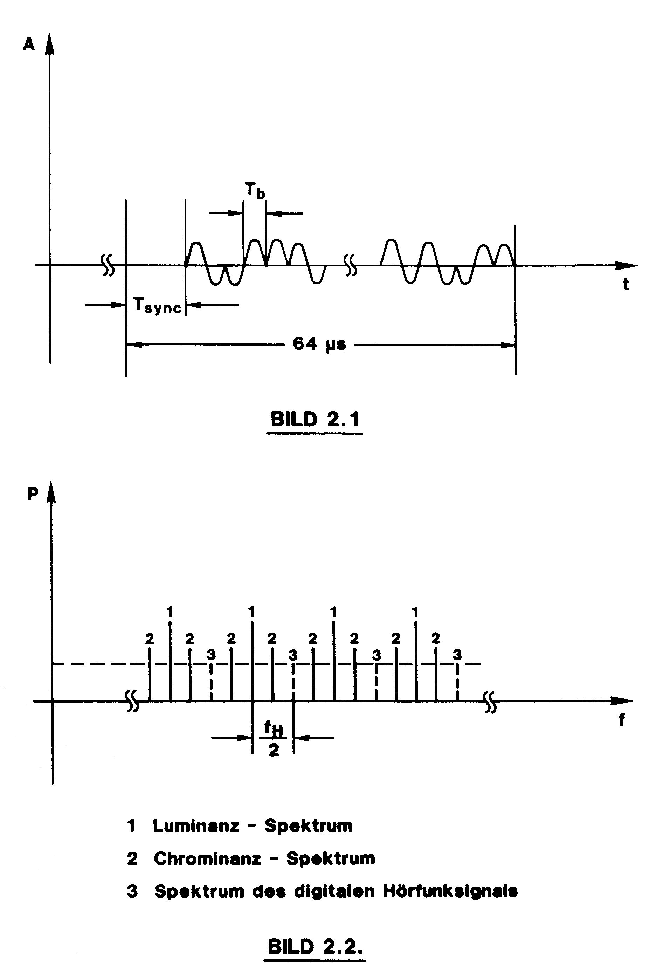

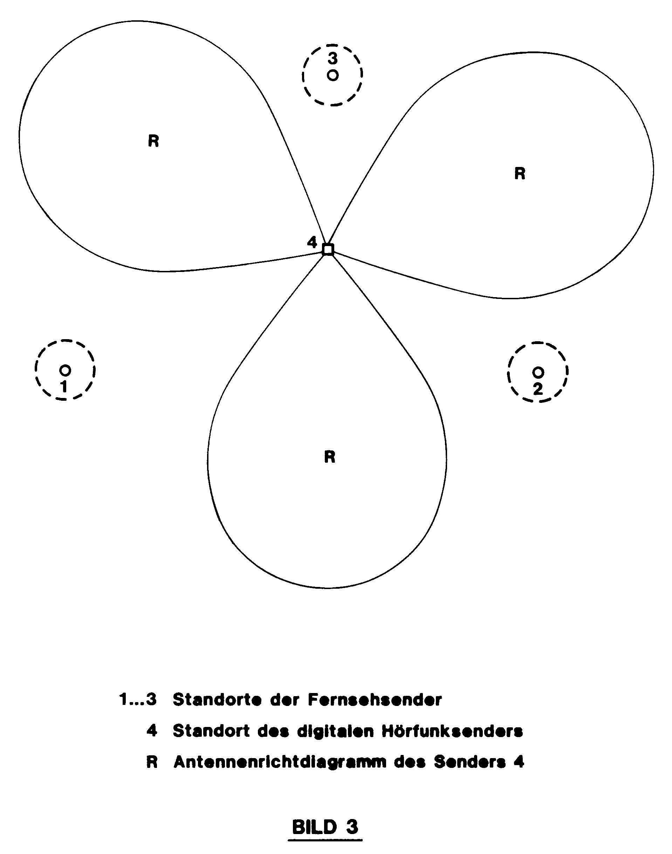

Erfindungsgemäß ist in das von den gleichkanaligen Fernsehsendern 1, 2, 3 gebildete und als bestehend vorausgesetzte Gleichkanal-Fernsehsendernetz ein gleichkanaliger, digitaler Hörrundfunksender 4 eingeschachtelt, dessen Versorgungsgebiet ebenfalls durch einen gestrichelt gezeichneten Kreis angedeutet ist. Unter "gleichkanaliger digitaler Hörfunksender" wird vorliegend verstanden, daß die Sendefrequenzbänder des durch den digitalen Hörfunksender 4 repräsentierten digitalen Hörfunkübertragungssystems identisch sind mit den Sendefrequenzbändern des durch die Fernsehsender 1 bis 3 repräsentierten, vorhandenen Fernsehübertragungssystems. Der Standort des digitalen Hörrundfunksenders 4 liegt im Schwerpunkt des von den Fernsehsendern 1, 2, 3 gebildeten gleichseitigen Dreiecks, so daß der digitale Hörfunksender 4 gleiche Abstände von den Fernsehsendern 1 bis 3 aufweist. Die durch den digitalen Hörfunksender 4 an den Rändern der gleichkanaligen Fernsehversorgungsgebiete hervorgerufenen Störeinflüsse sind für den Fernsehsender 3 durch einen Pfeil II angedeutet. Gleichermaßen ergeben sich auch Störeinflüsse durch die Fernsehsender 1 bis 3 am Rand des gleichkanaligen Hörfunkversorgungsbereichs, wie in Fig. 1 durch einen Pfeil I angedeutet ist. Überraschenderweise hat sich gezeigt, daß sich die Leistung und Modulationsart, z.B. 2 PSK- oder 4 PSK-Modulation, des digitalen Hörfunksenders 4 so wählen läßt, daß die gleichkanaligen Fernsehsender 1 bis 3 durch die gleichkanaligen digitalen Hörfunksignale des Senders 4 nicht gestört werden (mithin der Störeinfluß durch den Pfeil II tolerierbar ist) und daß dennoch der Rauschabstand der digitalen Hörfunksignale bezogen auf den Störeinfluß des Pfeils I noch ausreichend groß ist, um eine sichere Decodierung der digitalten Hörfunksignale im gesamten Versorgungsbereich des digitalen Hörfunksenders 4 zu ermöglichen. Wie groß der Hörfunkversorgungsbereich im einzelnen ist, hängt von der Topographie des Versorgungsbereichs ab. Gegebenenfalls läßt sich der Hörfunkversorgungsbereich durch die in den Fig. 2 und 3 veranschaulichten und nachstehend erläuterten Maßnahmen vergrößern.

Die in Fig. 2 veranschaulichte Maßnahme beruht auf der Überlegung, dem digitalen Hörfunksignal eine ähnliche zeitliche und spektrale Struktur zu verleihen, wie sie in den Fernsehsignalen bestehender Fernsehnetze vorkommt. Dies bedeutet z.B. eine "zeilenweise" Portionierung in Abschnitte von je 64 µs Länge (entsprechend einer Zeilenfrequenz von 15,625 kHz), wobei jeder Abschnitt eine "aktive Signalperiode" von 52 µs Länge und eine "Rücklauf- oder Synchronisationsperiode" von 12 µs Länge aufweist. Das digitale Hörfunksignal gemäß Fig. 2.1 wird also nur während der aktiven Signalperiode übertragen, im dargestellten Beispielsfall in 2 PSK-Modulation. Die mit "T_{sync}" in Fig. 2.1 bezeichnete Periode ist signalfrei und könnte zur zeitmultiplexen Übertragung von Zusatzinformationen genutzt werden.

Aufgrund der zeitlichen Strukturierung des digitalen Hörfunksignals gemäß Fig. 2.1 ergibt sich eine Spektralverteilung, wie sie in bezug zu der Spektralverteilung eines gleichkanaligen Fernsehsignals (für dessen Luminanz- und Chrominanzkomponenten) in Fig. 2.2 dargestellt ist. Dort sind mit "1" die Spektrallinien des Luminanzspektrums, mit "2" die Spektrallinien des Chrominanzspektrums und mit "3" die gestrichelten Spektrallinien des digitalen Ausdiosignalspektrums bezeichnet. Wie man erkennt, ist die spektrale Verkämmung derart, daß zwischen benachbarten Luminanz- und Audiosignalspektrallinien ein Frequenzabstand gleich der halben Zeilenfrequenz f_{H} vorhanden ist. Diese spektrale Verkämmung kann zu einem Offsetbetrieb des gleichkanaligen digitalen Hörfunksenders 4, d.h. zu einem geringfügigen Versatz seiner Sendefrequenz in bezug zu den Sendefrequenzen der gleichkanaligen Fernsehsender 1 bis 3 um einen Bruchteil der Zeilenfrequenz f_{H} ausgenutzt werden.

Mit diesem Offsetbetrieb lassen sich die gegenseitigen Störeinflüsse von Hörfunk- und Fernsehsendern verringern, was eine entsprechende Ausweitung des Versorgungsgebietes (Sendeleistung) des digitalen Hörfunksenders erlaubt.

Die in Fig. 3 veranschaulichte Maßnahme beruht derauf, das mit "R" bezeichnete Antennenrichtdiagramm des digitalen Hörfunksenders 4 so auszubilden, daß jede der drei Keulen der Richtcharakteristik in den Raum zwischen zwei Fernsehsender hineinragt und dabei die Versorgungsbereiche der Fernsehsender ausspart. Damit läßt sich die Störwirkung gemäß Pfeil II (Fig. 1) des gleichkanaligen Hörfunksenders auf die gleichkanaligen Fernsehsender 1 bis 3 weiter reduzieren.

## Patentansprüche

1. Verfahren zum Übertragen eines digitalisierten Hörfunksignals ohne Beeinträchtigung bestehender Fernsehübertragungssysteme, deren Sendefrequenzbänder identisch sind mit den Sendefrequenzbändern des digitalisierten Hörfunksignals, **dadurch gekennzeichnet,** daß die Standorte gleichkanaliger Hörfunk- und Fernsehsender derart gewählt sind, daß ein gleichkanaliger Hörfunksender in der geografischen Mitte zwischen nächstliegenden gleichkanaligen Fernsehsendern liegt, daß das digitale Hörfunksignal in seiner zeitlichen Struktur einem Fernsehsignal angepaßt ist und mit einem spektralen Frequenzversatz gegenüber den gleichkanaligen Fernsehsignalen ausgestrahlt wird, derart, daß sich eine spektrale Frequenzverschachtelung zwischen digitalen Hörfunksignalen und gleichkanaligen Fernsehsignalen ergibt.

2. Verfahren nach Anspruch 1, dadurch gekennzeichnet, daß die Richtcharakteristik für die Ausstrahlung des digitalen Hörfunksignals so gewählt ist, daß die Versorgungsbereiche gleichkanaliger Fernsehsender weitgehend ausgespart sind.

## Claims

1. Method for broadcasting a digital sound signal without impairing existing television broadcasting systems, whose transmission frequency bands are identical with the transmission frequency bands of the digital sound signal, **characterised** in that the positions of sound and television transmitters on equal channels are selected in such a way that a sound transmitter on a certain channel is positioned in the geographic centre between neighbouring television transmitters on the same channel, and that the temporal structure of the digital sound signal is adapted to a television signal and is radiated with a spectral frequency shift in relation to the television signals on the same channel in such a way that a spectral frequency interlocking between digital sound signals and television signals on the same channel arises.

2. Method according to claim 1, characterised in that the directional diagram for radiating the digital sound signal is selected in such a way that the coverage areas of television transmitters on the same channel largely are left uncovered.

## Revendications

1. Procédé de diffusion d'un signal audio numérisé, sans influence défavorable de systèmes existants de diffusion de télévision dont les bandes de fréquences d'émission sont identiques aux bandes de fréquences d'émission du signal audio numérisé, **caractérisé en ce que** les emplacements des émetteurs de signaux vidéo et de télévision à canal commun sont choisis d'une manière telle qu'un émetteur de signaux audio dans le canal commun est au milieu géographique entre des émetteurs de télévision du canal commun les plus voisins, en ce que le signal audio numérisé est adapté, quant à sa structure temporelle, à un signal de télévision et est émis selon un déport spectral de fréquence, vis-à-vis des signaux de télévision du canal commun, d'une manière telle qu'il se produit un entrelacement spectral de fréquences entre les signaux audio numérisés et les signaux de télévision du canal commun.

2. Procédé selon la revendication 1, caractérisé en ce que la caractéristique directive de l'émission du signal audio numérique est choisi d'une manière telle que la zone desservie par les émetteurs de télévision du canal commun est largement réservée.
